# EUROPÄISCHE PATENTANMELDUNG

(11) **EP 4 183 244 A1**
(43) Veröffentlichungstag der Anmeldung: **24.05.2023**
(21) Anmeldenummer: 22208326.3
(22) Anmeldetag: 18.11.2022
(51) Int. Cl.: A01F 15/14, A01F 15/07

(54) **RUNDBALLENPRESSE**

(30) Priorität: 19.11.2021 DE 102021130290
(71) Anmelder: Maschinenfabrik Bernard Krone GmbH & Co. KG, 48480 Spelle (DE)
(72) Erfinder: KRACHT, KATHARINA, 49832 Andervenne (DE); OSTHUES, CHRISTIAN, 48477 Hörstel (DE)

(57) **Zusammenfassung**

Die Erfindung betrifft eine Rundballenpresse (1), mit einem Rahmen (2), einer wenigstens teilweise innerhalb des Rahmens (2) angeordneten Pressvorrichtung (9) zum Pressen von landwirtschaftlichem Erntegut zu einem Ballen (50) in einer Presskammer (14), einem zur Presskammer (14) führenden Zuführkanal (7) für Erntegut sowie wenigstens einer Bindeeinheit (20, 30), die bezüglich einer Längsachse (X) vorderseitig der Pressvorrichtung (9) angeordnet ist und eine Bindematerialaufnahme (22, 32) zur Bevorratung von Bindematerial sowie eine Zuführeinheit (23, 33) zum Heranführen von Bindematerial in Richtung der Presskammer (14) aufweist, wobei wenigstens eine Bindeeinheit (20, 30) gegenüber dem Rahmen (2) aktorisch verstellbar ist und wobei vorderseitig der Pressvorrichtung (9) und wenigstens teilweise zwischen der wenigstens einen Bindeeinheit (20, 30) und der Pressvorrichtung (9) ein Fallraum (15) ausgebildet ist. Um eine kompakte Bauform einer Rundballenpresse sowie eine optimale Funktion eines Fallraums der Rundballenpresse zu erreichen, ist erfindungsgemäß vorgesehen, dass die Rundballenpresse (1) dazu eingerichtet ist, für eine Ballenbildung automatisch wenigstens eine Bindeeinheit (20, 30) derart in eine Fernstellung zu verstellen, dass der Fallraum (15) wenigstens bereichsweise erweitert wird, und für einen Bindevorgang nach der Ballenbildung derart in eine Nahstellung zu verstellen, dass der Fallraum (15) wenigstens bereichsweise verengt wird.

## Beschreibung

Die vorliegende Erfindung betrifft eine Rundballenpresse nach dem Oberbegriff von Anspruch 1 sowie ein Verfahren nach dem Oberbegriff von Anspruch 15.

Rundballenpressen werden in der Landwirtschaft eingesetzt, um Erntegut wie z.B. Heu oder Stroh aufzunehmen und zu Ballen zu verpressen. Das Erntegut wird (z.B. durch eine Pick-up) vom Boden aufgenommen, weitergefördert, normalerweise zerkleinert (z.B. mittels eines Schneidrotors) und schließlich in einer Presskammer zu runden Erntegutballen verpresst, die anschließend mit einem Bindematerial umwickelt werden. Rundballenpressen weisen regelmäßig eine Bindeeinheit auf, die zur Aufnahme einer Bindematerialrolle oder dergleichen ausgebildet ist, sowie dazu, das Bindematerial zur Presskammer zuzuführen, z.B. mittels eines beweglichen Zuführschnabels, der ein Ende des Bindematerials erfasst. Das zugeführte Bindematerial kann dann zum Binden des gepressten Ballens genutzt werden. Als Bindematerial können Schnüre, Netze oder (z.B. im Falle von Gras) Folien verwendet werden, wobei letztere auch außerhalb der Rundballenpresse in einem hiervon separaten Ballenwickelgerät appliziert werden können. Es sind auch Rundballenpressen mit einer Mehrzahl von Bindeeinheiten bekannt, wobei beispielsweise unterschiedlichen Arten von Bindematerial eingesetzt werden können.

Der Erntegutstrom wird normalerweise zwischen zwei Walzen hindurch in die Presskammer geführt. Je nach Bauart wird die Presskammer durch unterschiedliche Presselemente definiert, z.B. einen bzw. mehrere umlaufende Pressriemen und/oder um ortsfeste Drehachsen drehbare Presswalzen. Erfahrungsgemäß verbleibt ein Teil des Ernteguts nicht wie vorgesehen in der Presskammer, sondern wird durch eines oder mehrere Presselemente wieder zur Außenseite der Presskammer geführt und kann im Weiteren auch zwischen Presskammer und Bindeeinheit aufwärts geführt werden. Unter Umständen kann sich das Erntegut wieder vom Presselement lösen und herabfallen. Dies kann dadurch begünstigt werden, dass zwischen den Presselementen und der wenigstens einen Bindeeinheit ein Fallraum oder Fallschacht vorgesehen wird, in dem das Erntegut herunterfallen kann und idealerweise wieder in den Erntegutstrom gelangt, der zur Presskammer führt. In der Praxis kommt es allerdings immer wieder dazu, dass das Erntegut im Fallschacht eingeklemmt und nach oben herausgedrückt wird, statt wie vorgesehen herunterzufallen. Dieses Problem ist umso stärker ausgeprägt, je schmaler der Fallschacht ist. Ein breiterer Fallschacht bedeutet allerdings, dass der Abstand zwischen der Bindeeinheit und der Presskammer vergrößert wird, was einer möglichst kompakten Bauweise der Rundballenpresse entgegensteht.

Aufgabe der Erfindung ist es, eine kompakte Bauform einer Rundballenpresse sowie eine optimale Funktion eines Fallraums der Rundballenpresse zu erreichen.

Die Aufgabe wird gelöst mit einer Rundballenpresse mit den Merkmalen des unabhängigen Patentanspruchs 1. Vorteilhafte Ausführungsformen sind den abhängigen Ansprüchen entnehmbar.

Dafür wird eine Rundballenpresse geschaffen, mit einem Rahmen, einer wenigstens teilweise innerhalb des Rahmens angeordneten Pressvorrichtung zum Pressen von landwirtschaftlichem Erntegut zu einem Ballen in einer Presskammer, einem zur Presskammer führenden Zuführkanal für Erntegut sowie wenigstens einer Bindeeinheit, die bezüglich einer Längsachse vorderseitig der Pressvorrichtung angeordnet ist und eine Bindematerialaufnahme zur Bevorratung von Bindematerial sowie eine Zuführeinheit zum Heranführen von Bindematerial in Richtung der Presskammer aufweist, wobei wenigstens eine Bindeeinheit gegenüber dem Rahmen aktorisch verstellbar ist und wobei zwischen der wenigstens einen Bindeeinheit und der Pressvorrichtung oberhalb des Zuführkanals ein Fallraum ausgebildet ist.

Die Rundballenpresse ist zum Pressen von landwirtschaftlichem Erntegut zu (Rund-) Ballen ausgebildet. Sie kann selbstfahrend ausgebildet sein oder dazu vorgesehen sein, von einem Schlepper gezogen zu werden. Bei dem landwirtschaftlichen Erntegut kann es sich insbesondere um Halmgut wie Gras, Stroh oder Heu handeln. Der Rahmen bildet gewissermaßen die Grundstruktur der Rundballenpresse und verleiht ihr insgesamt Stabilität. Am Rahmen sind über eine geeignete Aufhängung auch die Laufräder der Rundballenpresse angebunden, ebenso wie - im Falle einer gezogenen Ausgestaltung - eine Deichsel. Außerdem weist der Rahmen typischerweise ein Gehäuse auf, das die innenliegenden Teile, namentlich die Pressvorrichtung, nach außen abschirmt. Der eigentliche Pressvorgang erfolgt innerhalb der Presskammer durch die Pressvorrichtung, die wenigstens teilweise, ggf. auch vollständig, innerhalb eines Rahmens angeordnet ist. Die Presskammer, in der die Ballenbildung und das Pressen des Ballens erfolgen, ist wenigstens teilweise durch die Pressvorrichtung begrenzt bzw. definiert, die wenigstens ein gegenüber dem Rahmen bewegliches Presselement (normalerweise eine Mehrzahl von Presselementen) aufweist. Das Erntegut kann mit einer Pick-up aufgenommen werden und mit einer Fördervorrichtung, z.B. einem Förderrotor, weiter in Richtung der Presskammer gefördert werden. Statt einer einfachen Fördervorrichtung oder zusätzlich zu dieser kann eine Schneidvorrichtung vorgesehen sein, die das Erntegut nicht nur weiterfördert, sondern auch schneidet. In jedem Fall ist ein Zuführkanal vorgesehen, den der Erntegutstrom durchläuft, bevor er zur Presskammer gelangt.

Weiterhin weist die Rundballenpresse wenigstens eine Bindeeinheit auf. Diese dient dazu, einen Bindevorgang einzuleiten, bei dem ein Ballen nach seiner Formung mit Bindematerial versehen wird, z.B. mit wenigstens einer Schnur, einem Netz oder einer Folie. Die Bindeeinheit ist bezüglich einer Längsachse vorderseitig der Presskammer angeordnet. Allgemein ist die Seite bezüglich der Längsachse, auf der die Bindeeinheit angeordnet ist, in diesem Zusammenhang die Vorderseite. Im Normalfall ist dies auch die Vorderseite in Fahrtrichtung. Man kann also in aller Regel auch sagen, dass die Bindeeinheit in Fahrtrichtung an bzw. vor der Vorderseite der Presskammer angeordnet ist. Die Bindeeinheit weist eine Bindematerialaufnahme zur Bevorratung von Bindematerial (typischerweise in Form einer Rolle mit Bindematerial) auf sowie eine Zuführeinheit zum Heranführen von Bindematerial in Richtung der Presskammer. Die Bindematerialaufnahme kann innerhalb eines Gehäuses der Bindeeinheit angeordnet sein. Das aus der Bindematerialaufnahme entnommene Bindematerial wird normalerweise über eine oder mehrere Umlenkrollen geleitet, die teilweise zur Bindematerialaufnahme und/oder zur Zuführeinheit gehören können. Die Bindematerialaufnahme kann außerdem eine Gummiwalze bzw. Bindematerialbremsrolle aufweisen, die dazu dient, das Bindematerial beim Abrollen zu bremsen und zu dehnen. Es kann auch eine Walze bzw. Rolle vorgesehen sein, die angetrieben ist und das Bindematerial aktiv fördert. Die Zuführeinheit führt das Bindematerial (von der Bindematerialaufnahme) in Richtung der Presskammer heran, also zur Presskammer hin, so dass der Ballen dort mit dem Bindematerial gebunden bzw. umwickelt werden kann. Dabei ist es nicht notwendig, dass die Zuführeinheit das Bindematerial bis unmittelbar an oder gar in die Presskammer führt. Ein Teil des Zuführens kann durch ein anderes Element (z.B. ein Presselement) erfolgen, an welches die Zuführeinheit das Bindematerial gewissermaßen übergibt. Zusätzlich zu der Bindematerialaufnahme und der Zuführeinheit kann die Bindeeinheit noch weitere Komponenten aufweisen, z.B. eine Befülleinrichtung, die ein Nachfüllen von Bindematerial in die Bindematerialaufnahme unterstützt, einen Rückhaltebügel, der das bevorratete Bindematerial in der Bindematerialaufnahme sichert, eine Raffvorrichtung etc.

Wenigstens eine Bindeeinheit ist aktorisch verstellbar mit dem Rahmen verbunden. D.h., wenigstens eine Bindeeinheit, im Falle mehrerer Bindeeinheiten bevorzugt jede Bindeeinheit, ist nicht stationär am Rahmen angeordnet, sondern kann gegenüber diesem aktorisch verstellt werden. Die Verstellbarkeit kann durch ein oder mehrere Aktoren realisiert sein, die insbesondere elektrisch, elektrohydraulisch, hydraulisch oder pneumatisch arbeiten können. Die Bindeeinheit ist in ihrer Gesamtheit verstellbar, also zumindest einschließlich der Bindematerialaufnahme und der Zuführeinheit.

Vorderseitig der Pressvorrichtung und wenigstens teilweise zwischen der wenigstens einen Bindeeinheit und der Pressvorrichtung ist ein Fallraum ausgebildet. Der Fallraum ist an der Vorderseite der Pressvorrichtung ausgebildet, man kann auch sagen, außenseitig der Pressvorrichtung. Insgesamt erstreckt sich der Fallraum entlang der Vertikalen bzw. entlang der Hochachse, wenngleich er bzw. die ihn begrenzenden Flächen in der Regel nicht parallel zur Hochachse verlaufen. Der Fallraum soll ermöglichen, dass Erntegut, welches unbeabsichtigt an der Vorderseite der Pressvorrichtung austritt, herabfallen bzw. herabgleiten kann. In der Regel kann zumindest ein Teil des herabfallenden Ernteguts wieder in den Erntegutstrom im Zuführkanal gelangen. Bevorzugt ist der Fallraum daher oberhalb des Zuführkanals angeordnet. Der Fallraum muss dabei nicht bzw. nicht vollständig vertikal über dem Zuführkanal angeordnet sein, allerdings ist es bevorzugt, dass zumindest ein unteres Ende des Fallraums vertikal über dem Zuführkanal angeordnet ist. Der Fallraum ist wenigstens teilweise zwischen der wenigstens einen Bindeeinheit und der Pressvorrichtung ausgebildet. D.h. die Pressvorrichtung und die Bindeeinheit(en) sind beabstandet, so dass der genannte Fallraum wenigstens teilweise zwischen ihnen ausgebildet ist. Zumindest dieser Teil des Fallraums kann auch als Fallschacht bezeichnet werden. Teilweise bzw. zeitweise kann die wenigstens eine Bindeeinheit aber auch so positioniert sein, dass der Fallraum vorderseitig gewissermaßen offen, also nicht durch ein Bindeeinheit begrenzt ist.

Erfindungsgemäß ist die Rundballenpresse dazu eingerichtet, für eine Ballenbildung automatisch wenigstens eine Bindeeinheit derart in eine Fernstellung zu verstellen, dass der Fallraum wenigstens bereichsweise erweitert wird, und für einen Bindevorgang nach der Ballenbildung derart in eine Nahstellung zu verstellen, dass der Fallraum wenigstens bereichsweise verengt wird. Die Rundballenpresse stellt wenigstens eine Bindeeinheit für eine Ballenbildung automatisch in eine Fernstellung, wobei durch das Verstellen der Fallraum wenigstens bereichsweise erweitert wird. Normalerweise erfolgt das Verstellen, bevor die Ballenbildung beginnt, es könnte allerdings auch wenigstens teilweise erfolgen, nachdem die Ballenbildung bereits begonnen hat. Der Fallraum wird durch das Verstellen wenigstens abschnittsweise erweitert, was die Möglichkeit einschließt, dass seine Ausdehnung in einem Abschnitt zunimmt und in einem anderen Abschnitt konstant bleibt oder abnimmt, wobei Letzteres nicht bevorzugt ist und nur dann sinnvoll sein kann, wenn hierdurch der Effekt der Erweiterung nicht zunichte gemacht wird. Eine Erweiterung liegt auch dann vor, wenn eine Bindeeinheit aus einem Abschnitt vollständig herausbewegt wird, so dass der Fallraum dort nur noch einseitig durch die Pressvorrichtung begrenzt ist. Durch die Erweiterung des Fallraums wird die Gefahr reduziert, dass Erntegut im Fallraum eingeklemmt wird und evtl. sogar durch die Pressvorrichtung aufwärts bewegt wird, statt in vorgesehener Weise herunterzufallen.

Für einen Bindevorgang nach der Ballenbildung verstellt die Rundballenpresse wenigstens eine Bindeeinheit automatisch derart in eine Nahstellung, dass der Fallraum wenigstens bereichsweise verengt wird. Normalerweise erfolgt das Verstellen nach der Ballenbildung und vor Beginn des Bindevorgangs, es könnte allerdings auch wenigstens teilweise erfolgen, bevor die Ballenbildung vollständig abgeschlossen ist oder nachdem der Bindevorgang begonnen hat. Der Fallraum wird durch das Verstellen wenigstens abschnittsweise verengt, was die Möglichkeit einschließt, dass seine Breite in einem Abschnitt abnimmt und in einem anderen Abschnitt konstant bleibt oder zunimmt. Eine Verengung liegt auch dann vor, wenn eine Bindeeinheit in einen Abschnitt hineinbewegt wird, so dass der Fallraum dort zuvor nur einseitig durch die Pressvorrichtung begrenzt war und danach zweiseitig durch Pressvorrichtung und Bindeeinheit begrenzt ist. Die Bindeeinheit, die zuvor zur Erweiterung des Fallraums von der Pressvorrichtung fort bewegt wurde, wird nun wieder der Pressvorrichtung angenähert in eine Nahstellung, in der das Heranführen des Bindematerials in Richtung der Presskammer (bzw. an die Presskammer) optimal durchgeführt werden kann. Der Abstand zur Pressvorrichtung bzw. zur Presskammer kann so bemessen sein, dass die Zuführeinheit diesen überbrücken kann, ohne übermäßig groß ausgestaltet zu sein. Andererseits besteht nach der Ballenbildung keine Gefahr mehr, dass größere Mengen von Erntegut im Fallraum eingeklemmt werden könnten, d.h. die geringere Breite des Fallraums ist insoweit unschädlich.

Da beim Einsatz der Rundballenpresse nacheinander eine Vielzahl von Ballenbildungen und Bindevorgängen durchgeführt werden, erfolgt auch das Verstellen der wenigstens einen Bindeeinheit normalerweise zyklisch. Normalerweise ist das Verstellen in die Nahstellung eine Umkehrung des Verstellens in die Fernstellung, d.h. die wenigstens eine Bindeeinheit wird aus der Nahstellung in die Fernstellung verstellt, dann aus der Fernstellung in die Nahstellung usw. Es wäre allerdings auch denkbar, dass z.B. unterschiedliche Fernstellungen eingestellt werden, z.B. derart, dass der Fallraum stärker erweitert wird, wenn durch Sensoren erkannt wird, dass trotz einer moderaten Erweiterung Erntegut den Fallraum verstopft. Auch wäre es denkbar, dass die Bindeeinheit zeitweise gar nicht verstellt wird, wenn erkannt wird, dass (aufgrund von Art und Zustand des Ernteguts) aktuell keine Gefahr besteht, dass der Fallraum blockiert werden könnte.

Die Rundballenpresse kann ein unabhängig von der wenigstens einen Bindeeinheit mit dem Rahmen verbundenes Bindematerialmesser zum Abschneiden von Bindematerial aufweisen. Das Bindematerialmesser ist normalerweise beweglich mit dem Rahmen verbunden. Alternativ kann auch jede Bindeeinheit ein Bindematerialmesser aufweisen, welches z.B. mit der Zuführeinheit verbunden sein kann und ggf. mit dieser verstellbar sein kann.

Mit besonderem Vorteil kann die erfindungsgemäße Verstellung eingesetzt werden, wenn die Pressvorrichtung wenigstens ein Presselement aufweist, welches sich angrenzend an den Fallraum im Betriebszustand aufwärts bewegt. Allgemein kann die Pressvorrichtung eine Presskammer mit fester oder variabler Größe definieren. Im ersteren Fall kann sie eine Mehrzahl von Presswalzen aufweisen, die um bezüglich des Rahmens stationäre Drehachsen drehbar sind. Im letzteren Fall ist die Presskammer wenigstens teilweise durch ein endloses, umlaufend antreibbares Presselement definiert, wobei es sich um ein oder mehrere endlose Pressriemen bzw. -gurte handeln kann oder z.B. einen Kettenstabförderer. Unabhängig von der Bauart ist es häufig so, dass sich derjenige Bereich eines Presselements (Pressriemen, Presswalze etc.), der an den Fallraum angrenzt, im Betriebszustand aufwärts bewegt. Dies bedeutet, dass am Presselement anhaftendes oder im Fallraum eingeklemmtes Erntegut durch das Presselement aufwärts gefördert wird, was wiederum die Wahrscheinlichkeit erhöhen würde, dass Erntegut nach oben aus dem Fallraum gedrückt wird. Dieser Tendenz kann durch die Verstellung der Bindeeinheit effektiv entgegengewirkt werden.

Falls der Fallraum gegenüber der Hochachse geneigt ist, also z.B. schräg abwärts nach hinten verläuft, kann die Fallraumerweiterung bzw. -verengung z.B. dadurch realisiert werden, dass eine Bindeeinheit vertikal aufwärts bzw. abwärts verstellt wird. Allerdings ist dies im Allgemeinen problematisch, da z.B. unterhalb der Bindeeinheit andere Komponenten der Rundballenpresse angeordnet sein können, wodurch der Bewegungsspielraum begrenzt ist. Bevorzugt ist daher jede Bindeeinheit wenigstens überwiegend in der Nahstellung bezüglich der Längsachse weiter hinten angeordnet als in der Fernstellung. D.h. die Verstellung erfolgt wenigstens anteilig in horizontaler Richtung, wobei die Bindeeinheit für die Ballenbildung nach vorne verstellt wird und für den Bindevorgang nach hinten. Die horizontale Bewegung kann von einer vertikalen Bewegung begleitet sein. Insbesondere kann alternativ oder zusätzlich zu einer Translation eine Rotation erfolgen. Dabei wäre es möglich, dass ein - normalerweise kleiner - Teil der Bindeeinheit in der Fernstellung weiter hinten angeordnet ist als in der Nahstellung, allerdings ist der überwiegende Teil der Bindeeinheit in der Fernstellung weiter vorne angeordnet.

Wie bereits erwähnt, kann die erfindungsgemäße Rundballenpresse eine einzige Bindeeinheit aufweisen. Gemäß einer bevorzugten Ausgestaltung weist sie allerdings zwei gegenüber dem Rahmen aktorisch verstellbare Bindeeinheiten auf, wobei der Fallraum bereichsweise zwischen je einer Bindeeinheit und der Pressvorrichtung ausgebildet ist. Beim Betrieb der Rundballenpresse können die beiden Bindeeinheiten mit unterschiedlichen Bindematerialien versehen sein, die je nach Bedarf eingesetzt werden, oder sie können das gleiche Bindematerial enthalten, wobei zunächst das Bindematerial der einen Bindeeinheit aufgebraucht werden kann, bevor die andere Bindeeinheit zum Einsatz kommt. Bei mehreren verstellbaren Bindeeinheiten kann jeder Bindeeinheit eine eigene Nahstellung und eine eigene Fernstellung zugeordnet werden.

Insbesondere kann die Rundballenpresse eine äußere Bindeeinheit aufweisen sowie eine innere Bindeeinheit, die wenigstens teilweise zwischen der äußeren Bindeeinheit und dem Rahmen angeordnet ist. D.h., die innere Bindeeinheit ist wenigstens teilweise näher am Rahmen angeordnet als die äußere Bindeeinheit. Sofern, wie oben erläutert, ein horizontales Verstellen wenigstens einer Bindeeinheit erfolgt, ist die äußere Bindeeinheit wenigstens in der Fernstellung weiter vorne angeordnet als die innere Bindeeinheit. In der Nahstellung kann die äußere Bindeeinheit insbesondere niedriger angeordnet sein als die innere Bindeeinheit.

Hinsichtlich der Aufhängung der Bindeeinheiten gegenüber dem Rahmen sind unterschiedliche Optionen denkbar. Bspw. könnten die Bindeeinheiten starr miteinander verbunden sein und gemeinsam gegenüber dem Rahmen verstellbar sein (so dass sie ihre Nahstellungen bzw. Fernstellungen nur gleichzeitig einnehmen können). Dies hätte den Vorteil, dass die Verstellung mit lediglich einem Aktor realisiert werden könnte, der allerdings ausreichend leistungsstark ausgelegt sein muss, um beide Bindeeinheiten zu bewegen. Ansonsten ist es allerdings im Allgemeinen vorteilhaft, wenn die beiden Bindeeinheiten individuell positioniert werden können. Eine alternative, bevorzugte Ausführungsform sieht vor, dass beide Bindeeinheiten unabhängig voneinander beweglich mit dem Rahmen verbunden sind. Entsprechend können die beiden Bindeeinheiten vollkommen unabhängig voneinander aktorisch verstellt werden, zumindest soweit keine Kollisionsgefahr zwischen den Bindeeinheiten gegeben ist. Anders ausgedrückt, die eine Bindeeinheit kann aktorisch verstellt werden, ohne dass dies die Position der anderen Bindeeinheit beeinflusst. Hierzu sind selbstverständlich zwei Aktoren notwendig, von denen einer eine Kraft bzw. ein Drehmoment zwischen dem Rahmen und der einen Bindeeinheit erzeugt und der andere eine Kraft bzw. ein Drehmoment zwischen dem Rahmen und der anderen Bindeeinheit. Da jeder Aktor nur eine der Bindeeinheiten bewegen muss, benötigt er nur eine vergleichsweise geringe Leistung und kann im Allgemeinen kompakter ausgestaltet sein.

Alternativ kann eine Bindeeinheit durch die andere Bindeeinheit indirekt mit dem Rahmen verbunden und aktorisch verstellbar mit dieser verbunden sein, wobei die andere Bindeeinheit aktorisch verstellbar mit dem Rahmen verbunden ist. Bei der hier geschilderten Ausführungsform kann insbesondere die o.g. innere Bindeeinheit aktorisch verstellbar mit dem Rahmen verbunden sein und die äußere Bindeeinheit über die innere Bindeeinheit mit dem Rahmen verbunden und aktorisch verstellbar mit dieser verbunden sein. Wie bei der o.g. Ausführungsform sind auch hier wenigstens zwei Freiheitsgrade gegeben, wobei allerdings das Verstellen derjenigen Bindeeinheit, die verstellbar mit dem Rahmen verbunden ist, die Position beider Bindeeinheiten verändert. Allerdings ist diejenige Bindeeinheit, die nur über die andere Bindeeinheit mit dem Rahmen verbunden ist, auch aktorisch gegenüber der anderen Bindeeinheit verstellbar, so dass ihre Position individuell eingestellt werden kann, wenngleich dies nicht vollständig unabhängig von der Stellung der anderen Bindeeinheit ist. Der Vorteil bei dieser Ausführungsform besteht darin, dass die Bewegung der beiden Bindeeinheiten nicht zeitlich koordiniert werden muss, um mögliche Kollisionen zu vermeiden. Hierdurch kann das Verstellen wiederum im Allgemeinen schneller erfolgen, was wiederum die Effizienz der Rundballenpresse insgesamt steigert. Auch diese Ausführungsform benötigt wenigstens zwei Aktoren, wobei ein erster Aktor zwischen dem Rahmen und der einen Bindeeinheit wirkt. Ein zweiter Aktor kann vorteilhaft zwischen den beiden Bindeeinheiten wirken. In diesem Fall muss der erste Aktor ausreichend leistungsstark ausgelegt sein, um beide Bindeeinheiten zu bewegen. Alternativ könnte der zweite Aktor allerdings auch zwischen der anderen Bindeeinheit und dem Rahmen wirken, wobei er den ersten Aktor unterstützen könnte, wenn bspw. beide Bindeeinheiten gegeneinander arretiert werden.

Die Verstellbarkeit der wenigstens einen Bindeeinheit kann in unterschiedlicher Weise realisiert werden, bspw. durch eine translatorische, unter Umständen sogar geradlinige Verschiebung. Eine Ausgestaltung sieht vor, dass wenigstens eine Bindeeinheit schwenkbar mit dem Rahmen verbunden ist. Die Schwenkachse verläuft dabei normalerweise parallel zur Querachse der Rundballenpresse. Insbesondere kann die oben erwähnte innere Bindeeinheit schwenkbar mit dem Rahmen verbunden sein.

Ebenfalls vorteilhaft kann wenigstens eine Bindeeinheit über zwei Schwenkarme verstellbar mit dem Rahmen verbunden sein. Jeder der Schwenkarme kann jeweils über eine Schwenkachse mit dem Rahmen verbunden sein und über eine andere Schwenkachse mit der Bindeeinheit, so dass sich eine Doppelarmaufhängung ergibt. Es wären auch kompliziertere Aufhängungen denkbar, wobei bspw. ein Schwenkarm seinerseits durch zwei weitere Schwenkarme mit dem Rahmen verbunden ist. In jedem Fall lassen sich durch die Anordnung der Schwenkachsen und die Länge der Schwenkarme eine größere Anzahl verschiedener Bewegungsbahnen realisieren als bei einer einfachen Schwenkverbindung mit dem Rahmen. Dies kann genutzt werden, um bspw. Kollisionen zwischen zwei Bindeeinheiten zu vermeiden. Insbesondere kann die oben erwähnte äußere Bindeeinheit über zwei Schwenkarme mit dem Rahmen verbunden sein.

Wie bereits oben erwähnt, ist bei zwei Bindeeinheiten, die unabhängig voneinander mit dem Rahmen verbunden sind, unter Umständen die Möglichkeit einer Kollision zwischen den Bindeeinheiten gegeben. Dies muss bei deren Ansteuerung beachtet werden. Gemäß einer Ausgestaltung ist die Rundballenpresse dazu eingerichtet, die äußere Bindeeinheit wenigstens teilweise vor der inneren Bindeeinheit in die Fernstellung zu verstellen und die innere Bindeeinheit wenigstens teilweise vor der äußeren Bindeeinheit in die Nahstellung zu verstellen. Man kann dies derart verstehen, dass durch das Verstellen der äußeren Bindeeinheit in die Fernstellung Platz geschaffen wird für das Verstellen der inneren Bindeeinheit, während umgekehrt durch das Verstellen der inneren Bindeeinheit in die Nahstellung Platz geschaffen wird für das Verstellen der äußeren Bindeeinheit.

Die Verstellbarkeit der Bindeeinheiten reicht in der Regel nicht aus, um das Heranführen des Bindematerials an die Presskammer zu ermöglichen. Vorteilhaft ist daher wenigstens eine Zuführeinheit gegenüber der Bindematerialaufnahme verstellbar und weist eine Haltevorrichtung auf, die dazu ausgebildet ist, einen Endbereich des Bindematerials zu halten und an die Presskammer heranzuführen. Die Haltevorrichtung kann bspw. als Zuführschnabel ausgebildet sein, der zwei aufeinander zulaufende Klemmelemente wie Bleche und/oder Gummitücher umfasst, zwischen denen ein Endbereich des Bindematerials eingeklemmt werden kann. Die Zuführvorrichtung kann als Zuführpendel ausgebildet sein, wobei die Haltevorrichtung -z.B. zusammen mit einer oder mehrerer Umlenkrollen - an einem Träger angeordnet ist, der über zwei Schwenkarme mit der Bindematerialaufnahme verbunden ist bzw. mit einem Gehäuse, in dem die Bindematerialaufnahme angeordnet ist. Es versteht sich, dass zum Verstellen der Zuführeinheit ein weiterer Aktor erforderlich ist. Die Zuführeinheit ist verstellbar zwischen einer ausgefahrenen Position, in der das Bindematerial an die Presskammer herangeführt wird, und einer eingefahrenen Position, in der die Zuführeinheit kompakt am Rest der Bindeeinheit angeordnet sein kann. In der eingefahrenen Position können die Zuführeinheit und insbesondere das von dieser geführte Bindematerial besser vor Beschädigung sowie Verschmutzung geschützt sein als in der ausgefahrenen Position.

Unter Umständen sind verschiedene Betriebsmodi der Rundballenpresse in Bezug auf die Verstellung der Bindeeinheiten denkbar. Wie oben beschrieben können beide Bindeeinheiten zwischen ihrer jeweiligen Nahstellung und Fernstellung verstellt werden. Es ist allerdings auch möglich, dass die Rundballenpresse dazu eingerichtet ist, optional die innere Bindeeinheit in die Nahstellung zu verstellen und dabei die äußere Bindeeinheit in der Fernstellung zu halten, den Bindevorgang mit der inneren Bindeeinheit durchzuführen und danach die innere Bindeeinheit in die Fernstellung zu verstellen. Bei dieser Ausgestaltung wird der Bindevorgang ausschließlich mit der inneren Bindeeinheit durchgeführt. Daher ist ein Verstellen der äußeren Bindeeinheit unnötig und diese kann während der Ballenbildung ebenso wie während des Bindevorgangs in ihrer Fernstellung verbleiben. Da auf das Verstellen der äußeren Bindeeinheit verzichtet wird, können sowohl Zeit als auch Energie eingespart werden.

Eine Ausgestaltung sieht vor, dass wenigstens eine Bindeeinheit eine der Pressvorrichtung zugewandte, den Fallraum begrenzende Rückwand aufweist, wobei wenigstens eine Zuführeinheit durch die wenigstens eine Rückwand gegenüber dem Fallraum abgeschirmt ist, wenn jede Bindeeinheit in der Nahstellung angeordnet ist. Die Rückwand kann positionsfest bezüglich der Bindematerialaufnahme befestigt sein, z.B. an einem Gehäuse der Bindeeinheit. Sie kann allerdings auch an der Zuführeinheit befestigt sein, so dass sie ggf. zusammen mit dieser gegenüber der Bindematerialaufnahme beweglich ist. Die Rückwand ist normalerweise durchgehend ausgebildet, d.h. sie weist keine Öffnungen auf, durch die Erntegut hindurchgelangen könnte. Zumindest dann, wenn jede Bindeeinheit in der Nahstellung angeordnet ist, schirmt die wenigstens eine Rückwand eine Zuführeinheit gegenüber dem Fallraum ab. Hierdurch wird verhindert, dass Erntegut auf die Zuführeinheit oder das von dieser geführte Bindematerial gelangt. Die Rückwand kann somit die Schutzfunktion einer - von der Bindeeinheit separaten - Pendelklappe übernehmen, die im Stand der Technik genutzt wird, um den Fallraum zeitweise zu verschließen und so die Zuführeinheit(en) zu schützen.

Die beschriebene Schutzfunktion kann weiter dadurch verbessert werden, dass wenigstens eine Bindeeinheit in der Nahstellung mit ihrer Rückwand den Fallraum nach unten hin wenigstens überwiegend verschließt. Dies bedeutet, dass die Rückwand so ausgestaltet ist, dass sie in der Nahstellung so dicht an der Pressvorrichtung angeordnet ist, dass der Fallraum hierdurch vollständig oder zumindest überwiegend verschlossen ist. Eventuell innerhalb des Fallraums herabfallendes Erntegut kann somit nicht mehr auf darunterliegende Elemente fallen, insbesondere nicht auf die Zuführeinheit. Dies ist besonders dann wichtig, wenn die Zuführeinheit zur Presskammer hin geschwenkt ist. Deshalb wird der Fallraum bevorzugt zumindest während des Bindevorgangs geschlossen, entweder vollständig oder teilweise. Sofern der Fallraum nach unten hin nicht vollständig verschlossen ist, ist eine verbleibende Lücke so klein, dass hierdurch kaum noch Erntegut hindurchgelangen kann. Wenn die Bindeeinheit in die Fernstellung verstellt wird, entfernt sich die Rückwand von der Pressvorrichtung und der Fallraum wird wieder geöffnet.

Die Aufgabe wird weiterhin gelöst mit einem Verfahren zum Betreiben einer Rundballenpresse, mit einem Rahmen, einer wenigstens teilweise innerhalb des Rahmens angeordneten Pressvorrichtung zum Pressen von landwirtschaftlichem Erntegut zu einem Ballen in einer Presskammer, einem zur Presskammer führenden Zuführkanal für Erntegut sowie wenigstens einer Bindeeinheit, die bezüglich einer Längsachse vorderseitig der Pressvorrichtung angeordnet ist und eine Bindematerialaufnahme zu Bevorratung von Bindematerial sowie eine Zuführeinheit zum Heranführen von Bindematerial in Richtung der Presskammer aufweist, wobei wenigstens eine Bindeeinheit gegenüber dem Rahmen aktorisch verstellbar ist und wobei vorderseitig der Pressvorrichtung und wenigstens teilweise zwischen der wenigstens einen Bindeeinheit und der Pressvorrichtung ein Fallraum ausgebildet ist.

Erfindungsgemäß sieht das Verfahren vor, dass für eine Ballenbildung automatisch wenigstens eine Bindeeinheit derart in eine Fernstellung verstellt wird, dass der Fallraum wenigstens bereichsweise erweitert wird, und für einen Bindevorgang nach der Ballenbildung derart in eine Nahstellung verstellt wird, dass der Fallraum wenigstens bereichsweise verengt wird.

Die genannten Begriffe wurden bereits mit Bezug auf die erfindungsgemäße Rundballenpresse erläutert und werden daher nicht nochmals erklärt. Bevorzugte Ausgestaltungen des erfindungsgemäßen Verfahrens entsprechen denen der erfindungsgemäßen Rundballenpresse.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht einer ersten erfindungsgemäßen Rundballenpresse mit zwei Bindeeinheiten in einer Nahstellung;
- Fig. 2: eine Schnittdarstellung der Rundballenpresse aus Fig. 1;
- Fig. 3: eine Schnittdarstellung entsprechend Fig. 1 mit den Bindeeinheiten in einer Fernstellung;
- Fig. 4: eine Seitenansicht einer zweiten erfindungsgemäßen Rundballenpresse mit zwei Bindeeinheiten in einer Nahstellung; sowie
- Fig. 5: eine Schnittdarstellung einer dritten erfindungsgemäßen Rundballenpresse mit zwei Bindeeinheiten in einer Nahstellung.

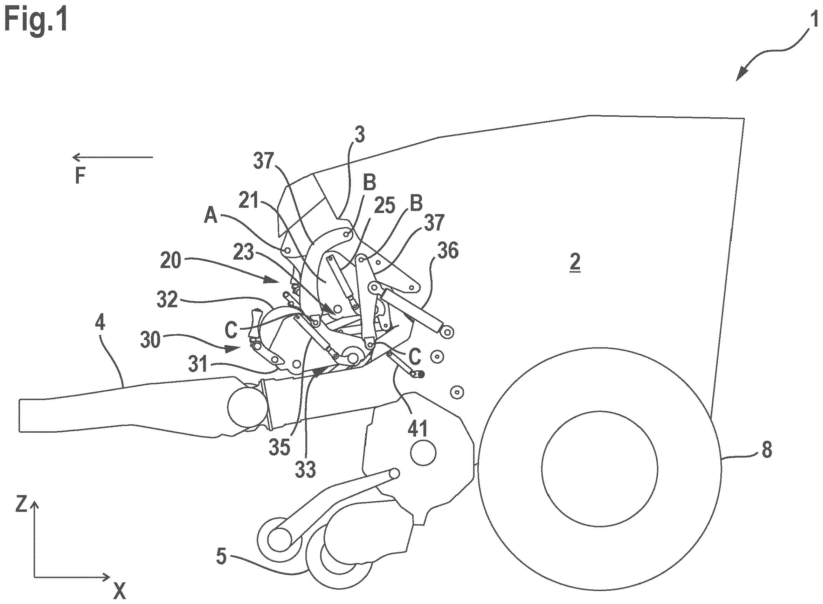

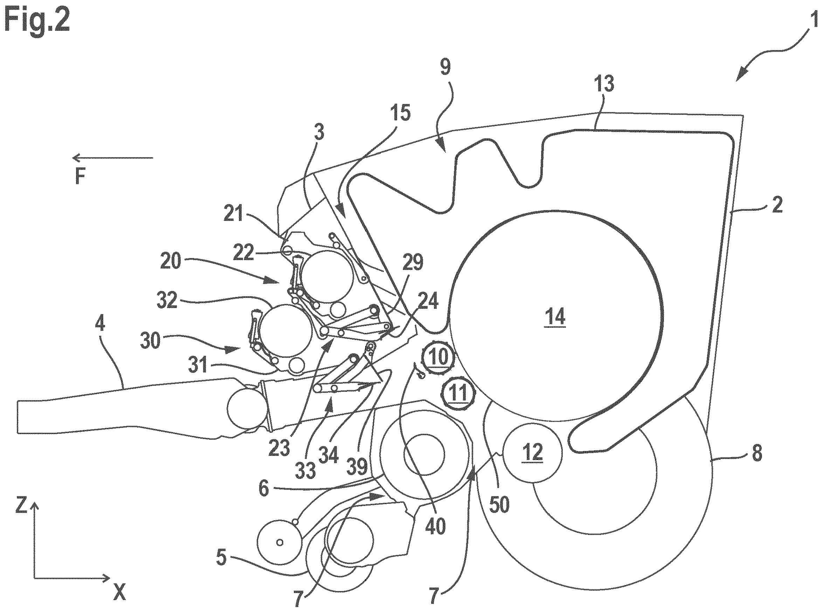

Fig. 1 - 3 zeigen eine erste Ausführungsform einer erfindungsgemäßen Rundballenpresse 1. Diese weist einen Rahmen 2 auf, der ihr insgesamt strukturelle Stabilität verleiht. Der Rahmen 2 ist auf hier schematisch dargestellten Laufrädern 8 abgestützt. In einer Fahrtrichtung F vorderseitig ist am Rahmen 2 eine Deichsel 4 angeordnet, über welche die Rundballenpresse 1 mit einem hier nicht dargestellten Schlepper verbunden werden kann. In den Figuren sind jeweils eine entgegen der Fahrtrichtung F nach hinten weisende Längsachse X sowie eine nach oben weisende Hochachse Z der Rundballenpresse 1 eingezeichnet. Wie aus der Zusammenschau von Fig. 1 und Fig. 2 hervorgeht, weist die Rundballenpresse 1 eine Pick-up 5 auf, mit welcher Erntegut vom Boden aufgenommen und über einen Zuführkanal 7 weiter zu einem Förderrotor 6 befördert wird. Der Förderrotor 6, der auch als Schneidrotor ausgebildet sein kann, befördert das Erntegut durch den Zuführkanal 7 weiter zu einer Presskammer 14 innerhalb des Rahmens 2. Die Presskammer 14 wird durch eine Pressvorrichtung 9 ausgebildet, die in diesem Fall drei Walzen 10, 11, 12 sowie eine Mehrzahl von Pressriemen 13 aufweist. Die Pressriemen 13 sind in geeigneter Weise durch Führungsrollen geführt, die hier aus Gründen der Übersichtlichkeit nicht dargestellt sind.

Fig. 2 zeigt einen fertigen Ballen 50, zu dem Erntegut in der Presskammer 14 verpresst wurde. Bevor der Ballen 50 ausgeworfen wird, wird er mit Bindematerial umwickelt, wozu die Rundballenpresse zwei Bindeeinheiten 20, 30 aufweist. Genauer gesagt ist eine innere Bindeeinheit 20 näher am Rahmen 2 angeordnet und eine äußere Bindeeinheit 30 weiter vom Rahmen 2 entfernt. Beide Bindeeinheiten 20, 30 sind mit einer Bindungsbrücke 3 verbunden, die einen Teil des Rahmens 2 bildet. Jede Bindeeinheit 20, 30 weist ein in sich starres Gehäuse 21, 31 auf, in dem eine Bindematerialaufnahme 22, 32 angeordnet ist, in welcher hier nicht dargestelltes Bindematerial bevorratet werden kann. Es ist ein rollenförmiger Bindematerialvorrat vorgesehen, wobei das Bindematerial bspw. eine Schnur, ein Netz oder eine Folie sein kann. Von der Bindematerialaufnahme 22, 32 wird das Bindematerial zu einer hier als Zuführpendel ausgebildeten Zuführeinheit 23, 33 geführt, die eine als Zuführschnabel ausgebildete Halteeinheit 24, 34 aufweist. Die Halteeinheit 24, 34 ist an einem Träger angeordnet, der über zwei Schwenkarme (ohne Bezugszeichen) mit dem Gehäuse 21, 31 verbunden und durch jeweils einen Aktor 25, 35 verstellbar ist.

Zwischen den Bindeeinheiten 20, 30 und der Pressvorrichtung 9 ist ein Fallraum 15 ausgebildet, dessen unteres Ende bezüglich der Hochachse Z vertikal oberhalb des Förderrotors 6 sowie des Zuführkanals 7 angeordnet ist. Dieser Fallraum 15 wird nach hinten im Wesentlichen durch einen Teil der Pressriemen 13 sowie eine obere Walze 10 und eine mittlere Walze 11 begrenzt, während er nach vorne wenigstens abschnittsweise durch eine Rückwand 29 der inneren Bindeeinheit 20 sowie eine Rückwand 39 der äußeren Bindeeinheit 30 begrenzt wird. Während die erstgenannte Rückwand 29 stationär am Gehäuse 21 befestigt ist, ist die letztgenannte Rückwand 39 an der Zuführeinheit 33 befestigt und somit gegenüber dem zugehörigen Gehäuse 31 beweglich. Die Walzen 10, 11 sowie die Pressriemen 13 bewegen sich im Betriebszustand angrenzend an den Fallraum 15 aufwärts.

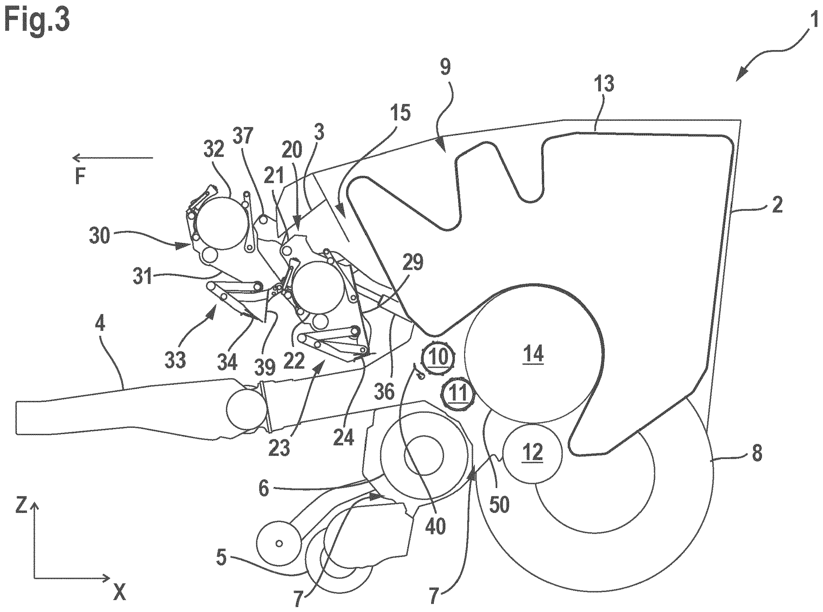

Beide Bindeeinheiten 20, 30 sind unabhängig voneinander beweglich mit dem Rahmen 2 verbunden und gegenüber diesem aktorisch verstellbar. Die innere Bindeeinheit 20 ist über eine erste Schwenkachse A mit der Bindungsbrücke 3 verbunden und kann über einen in den Figuren nicht dargestellten Aktor zwischen einer in Fig. 1 und 2 dargestellten Nahstellung und einer in Fig. 3 dargestellten Fernstellung geschwenkt werden. Die äußere Bindeeinheit 30 ist über zwei Schwenkarme 37 mit der Bindungsbrücke 3 verbunden. Die Schwenkarme 37 sind über zweite Schwenkachsen B mit der Bindungsbrücke verbunden sowie über dritte Schwenkachsen C mit dem Gehäuse 31 der äußeren Bindeeinheit 30. Die äußere Bindeeinheit 30 kann mittels eines bspw. als Hydraulikzylinder ausgebildeten Aktors 36 zwischen einer in Fig. 1 und 2 dargestellten Nahstellung und einer in Fig. 3 dargestellten Fernstellung verstellt werden.

Fig. 1 und 2 repräsentieren einen Zustand unmittelbar nach dem Abschluss einer Ballenbildung, d. h. der Ballen 50 hat seine vorgesehene Größe erreicht und kann nunmehr mit Bindematerial umwickelt werden. Dementsprechend stellt die Rundballenpresse 1 beide Bindeeinheiten 20, 30 in die Nahstellung, wodurch der Fallraum 15 im Vergleich zur Fernstellung verengt ist. Gleichzeitig sind die Bindeeinheiten 20, 30 so positioniert, dass die Zuführeinheiten 23, 33 das Bindematerial an die Presskammer 14 heranführen können, in diesem Fall in einen Zuführspalt (ohne Bezugszeichen) zwischen die obere Walze 10 und die mittlere Walze 11. Fig. 1 bis 3 zeigen die Zuführeinheiten 23, 33 jeweils in einer eingefahrenen Position, in der die Zuführeinheit 23, 33 kompakt am Gehäuse 21, 31 der Bindeeinheit 20, 30 angeordnet ist. Zum Einleiten des eigentlichen Bindevorgangs ist die Zuführeinheit 23, 33 durch den zugehörigen Aktor 25, 35 in eine (nicht dargestellte) ausgefahrene Position verstellbar, in der die Haltevorrichtung 24, 34 unmittelbar benachbart zu den Walzen 10, 11 angeordnet ist. In der eingefahrenen Position sind die jeweilige Zuführeinheit 24, 34 und insbesondere das von dieser geführte Bindematerial vor Beschädigung sowie Verschmutzung geschützt, was u.a. dadurch erreicht wird, dass die Rückwände 29, 39 eine Abschirmung gegenüber dem Fallraum 15 bilden. Normalerweise wird der Bindevorgang mit nur einer der beiden Bindeeinheiten 20, 30 durchgeführt, es könnten theoretisch aber auch beide Bindeeinheiten 20, 30 nacheinander (oder sogar gleichzeitig) zum Einsatz kommen, bspw. um zwei unterschiedliche Bindematerialien zu applizieren. Wenn der Bindevorgang abgeschlossen ist, wird das Bindematerial durch ein Bindematerialmesser F abgeschnitten, welches über einen Aktor 41 gesteuert wird. Das Bindematerialmesser 40 ist in diesem Fall am Rahmen 2 bzw. an der Deichsel 4 angeordnet. Alternativ könnte jede Bindeeinheit 20, 30 ein eigenes Bindematerialmesser aufweisen.

Sobald der umwickelte Ballen 50 ausgeworfen wurde, beginnt eine neue Ballenbildung. Hierzu werden beide Bindeeinheiten 20, 30 in die in Fig. 3 dargestellte Fernstellung verstellt, wodurch der Fallraum 15 wesentlich erweitert wird. Somit kann Erntegut, welches unbeabsichtigt zwischen der oberen Walze 10 und der mittleren Walze 11 bzw. zwischen der oberen Walze 10 und den Pressriemen 13 nach vorne austritt, nach unten herabfallen oder herabgleiten, ohne dass die Gefahr besteht, dass dieses zwischen der Pressvorrichtung 9 und einer der Bindeeinheiten 20, 30 eingeklemmt wird. Die größere Entfernung der Bindeeinheiten 20, 30 zur Pressvorrichtung 9 ist dabei unschädlich, da sie während der Ballenbildung nicht benötigt werden. Um eine Kollision zu vermeiden, wird zunächst die äußere Bindeeinheit 30 in die Fernstellung verstellt und anschließend die innere Bindeeinheit 20. Umgekehrt wird nach Abschluss der Ballenbildung für den nächsten Bindevorgang zunächst die innere Bindeeinheit 20 in die Nahstellung verstellt und anschließend die äußere Bindeeinheit 30.

Sofern der Bindevorgang ausschließlich mit der inneren Bindeeinheit 20 durchgeführt werden kann, kann die äußere Bindeeinheit 30 auch permanent in der Fernstellung gehalten werden, wobei nur die innere Bindeeinheit 20 zwischen der Nahstellung und der Fernstellung verstellt wird.

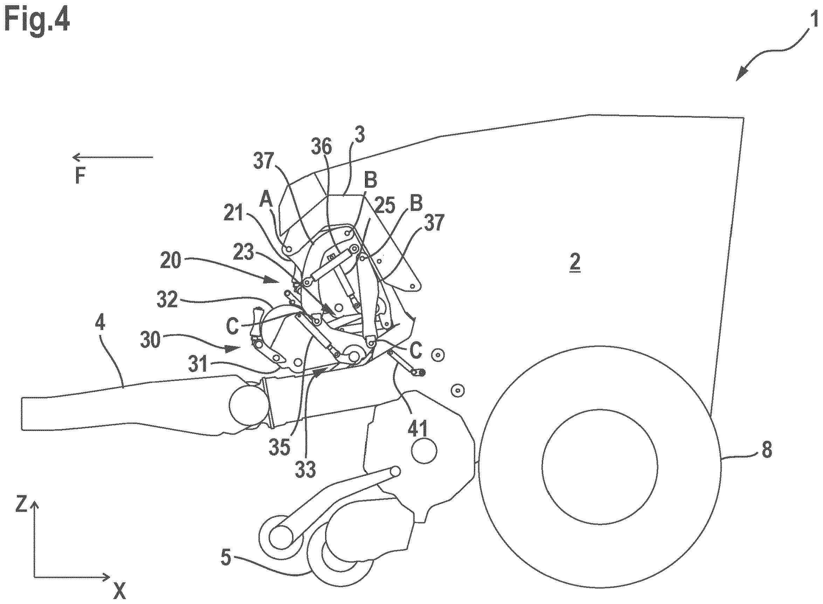

Fig. 4 zeigt eine zweite Ausführungsform einer erfindungsgemäßen Rundballenpresse 1, die weitgehend mit der in Fig. 1 bis 3 dargestellten Ausführungsform identisch ist und insofern nicht nochmals erläutert wird. Im Unterschied hierzu ist allerdings die äußere Bindeeinheit 30 über die Schwenkarme 37 mit dem Gehäuse 21 der inneren Bindeeinheit 20 verbunden, d. h. die zweiten Schwenkachsen B sind am Gehäuse 21 angeordnet. Entsprechend ist der Aktor 36 nicht wie bei der ersten Ausführungsform mit dem Rahmen 2 verbunden, sondern mit dem Gehäuse 21. Diese Ausgestaltung hat den Vorteil, dass die Bewegungen der beiden Bindeeinheiten 20, 30 nicht koordiniert werden müssen, um etwaige Kollisionen zu vermeiden, was einen erheblichen Zeitvorteil bedeuten kann. Andererseits benötigt bei der ersten Ausführungsform derjenige Aktor, der die innere Bindeeinheit 20 verstellt, nur eine vergleichsweise geringe Leistung und ist im Allgemeinen kompakter, während bei dieser Ausführungsform der entsprechende Aktor beide Bindeeinheiten 20, 30 bewegen bzw. stützen muss und daher eine höhere Leistung benötigt.

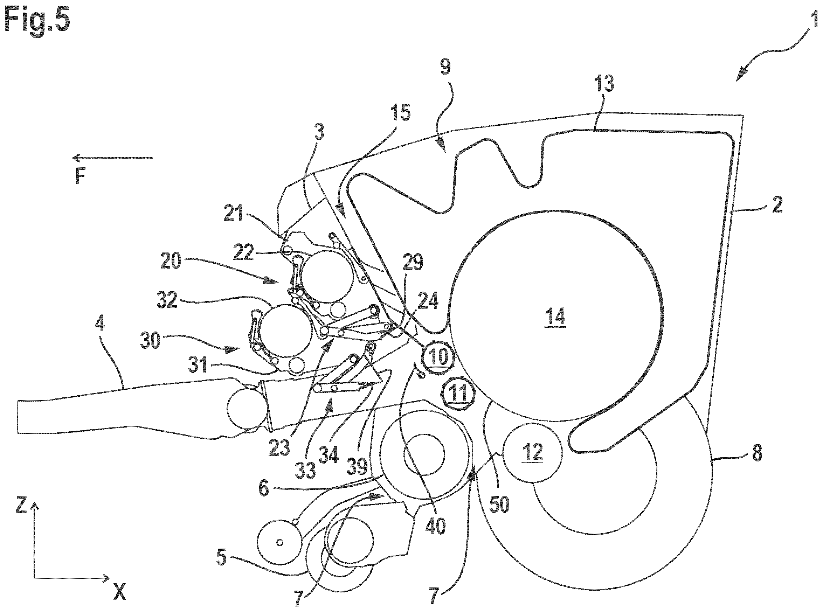

Fig. 5 zeigt eine dritte Ausführungsform einer erfindungsgemäßen Rundballenpresse 1, die wiederum weitgehend mit der in Fig. 1 bis 3 dargestellten ersten Ausführungsform identisch ist. Im Unterschied hierzu ist allerdings die Form der Rückwand 29 der inneren Bindeeinheit 20 so angepasst, dass sie sich in der Nahstellung bis zur oberen Walze 10 erstreckt und somit den Fallraum 15 nach unten abschließt, und zwar oberhalb des o.g. Zuführspalts. Auf diese Weise sind die Zuführeinheiten 23, 33 sowie das von Ihnen geführte Bindematerial vollständig gegenüber etwaigen herabfallenden Erntegut abgeschirmt. Insbesondere bei dieser Ausführungsform kann daher auf eine von den Bindeeinheiten 20, 30 unabhängige Pendelklappe verzichtet werden, mit welcher der Fallraum 15 verschlossen werden müsste.

## Patentansprüche

1. Rundballenpresse (1), mit einem Rahmen (2), einer wenigstens teilweise innerhalb des Rahmens (2) angeordneten Pressvorrichtung (9) zum Pressen von landwirtschaftlichem Erntegut zu einem Ballen (50) in einer Presskammer (14), einem zur Presskammer (14) führenden Zuführkanal (7) für Erntegut sowie wenigstens einer Bindeeinheit (20, 30), die bezüglich einer Längsachse (X) vorderseitig der Pressvorrichtung (9) angeordnet ist und eine Bindematerialaufnahme (22, 32) zur Bevorratung von Bindematerial sowie eine Zuführeinheit (23, 33) zum Heranführen von Bindematerial in Richtung der Presskammer (14) aufweist, wobei wenigstens eine Bindeeinheit (20, 30) gegenüber dem Rahmen (2) aktorisch verstellbar ist und wobei vorderseitig der Pressvorrichtung (9) und wenigstens teilweise zwischen der wenigstens einen Bindeeinheit (20, 30) und der Pressvorrichtung (9) ein Fallraum (15) ausgebildet ist,
**dadurch gekennzeichnet, dass**
die Rundballenpresse (1) dazu eingerichtet ist, für eine Ballenbildung automatisch wenigstens eine Bindeeinheit (20, 30) derart in eine Fernstellung zu verstellen, dass der Fallraum (15) wenigstens bereichsweise erweitert wird, und für einen Bindevorgang nach der Ballenbildung derart in eine Nahstellung zu verstellen, dass der Fallraum (15) wenigstens bereichsweise verengt wird.

2. Rundballenpresse nach Anspruch 1, **dadurch gekennzeichnet, dass** die Pressvorrichtung (9) wenigstens ein Presselement (10, 11, 13) aufweist, welches sich angrenzend an den Fallraum (15) im Betriebszustand aufwärts bewegt.

3. Rundballenpresse nach einem der vorangehenden Ansprüche, **dadurch gekennzeichnet, dass** jede Bindeeinheit (20, 30) wenigstens überwiegend in der Nahstellung bezüglich der Längsachse (X) weiter hinten angeordnet ist als in der Fernstellung.

4. Rundballenpresse nach einem der vorangehenden Ansprüche, **dadurch gekennzeichnet, dass** diese zwei gegenüber dem Rahmen (2) aktorisch verstellbare Bindeeinheiten (20, 30) aufweist, wobei der Fallraum (15) bereichsweise zwischen je einer Bindeeinheit (20, 30) und der Pressvorrichtung (9) ausgebildet ist.

5. Rundballenpresse nach einem der vorangehenden Ansprüche, **dadurch gekennzeichnet, dass** diese eine äußere Bindeeinheit (30) aufweist sowie eine innere Bindeeinheit (20), die wenigstens teilweise zwischen der äußeren Bindeeinheit (30) und dem Rahmen (2) angeordnet ist.

6. Rundballenpresse nach einem der vorangehenden Ansprüche, **dadurch gekennzeichnet, dass** beide Bindeeinheiten (20, 30) unabhängig voneinander beweglich mit dem Rahmen (2) verbunden sind.

7. Rundballenpresse nach einem der vorangehenden Ansprüche, **dadurch gekennzeichnet, dass** eine Bindeeinheit (20, 30) durch die andere Bindeeinheit (20, 30) indirekt mit dem Rahmen (2) verbunden und aktorisch verstellbar mit dieser verbunden ist, wobei die andere Bindeeinheit (20, 30) aktorisch verstellbar mit dem Rahmen (2) verbunden ist.

8. Rundballenpresse nach einem der vorangehenden Ansprüche, **dadurch gekennzeichnet, dass** wenigstens eine Bindeeinheit (20, 30) schwenkbar mit dem Rahmen (2) verbunden ist.

9. Rundballenpresse nach einem der vorangehenden Ansprüche, **dadurch gekennzeichnet, dass** wenigstens eine Bindeeinheit (20, 30) über zwei Schwenkarme (37) verstellbar mit dem Rahmen (2) verbunden ist.

10. Rundballenpresse nach einem der vorangehenden Ansprüche, **dadurch gekennzeichnet, dass** diese dazu eingerichtet ist, die äußere Bindeeinheit (30) wenigstens teilweise vor der inneren Bindeeinheit (20) in die Fernstellung zu verstellen und die innere Bindeeinheit (20) wenigstens teilweise vor der äußeren Bindeeinheit (30) in die Nahstellung zu verstellen.

11. Rundballenpresse nach einem der vorangehenden Ansprüche, **dadurch gekennzeichnet, dass** wenigstens eine Zuführeinheit (23, 33) gegenüber der Bindematerialaufnahme (22, 32) verstellbar ist und eine Haltevorrichtung (24, 34) aufweist, die dazu ausgebildet ist, einen Endbereich des Bindematerials zu halten und in Richtung der Presskammer (14) heranzuführen.

12. Rundballenpresse nach einem der vorangehenden Ansprüche, **dadurch gekennzeichnet, dass** diese dazu eingerichtet ist, optional die innere Bindeeinheit (20) in die Nahstellung zu verstellen und dabei die äußere Bindeeinheit (30) in der Fernstellung zu halten, den Bindevorgang mit der inneren Bindeeinheit (20) durchzuführen und danach die innere Bindeeinheit (20) in die Fernstellung zu verstellen.

13. Rundballenpresse nach einem der vorangehenden Ansprüche, **dadurch gekennzeichnet, dass** wenigstens eine Bindeeinheit (20, 30) eine der Pressvorrichtung (9) zugewandte, den Fallraum (15) begrenzende Rückwand (29, 39) aufweist, wobei wenigstens eine Zuführeinheit (23, 33) durch die wenigstens eine Rückwand (29, 39) gegenüber dem Fallraum (15) abgeschirmt ist, wenn jede Bindeeinheit (20, 30) in der Nahstellung angeordnet ist.

14. Rundballenpresse nach einem der vorangehenden Ansprüche, **dadurch gekennzeichnet, dass** wenigstens eine Bindeeinheit (20, 30) in der Nahstellung mit ihrer Rückwand (29, 39) den Fallraum (15) nach unten hin wenigstens überwiegend verschließt.

15. Verfahren zum Betreiben einer Rundballenpresse (1), mit einem Rahmen (2), einer wenigstens teilweise innerhalb des Rahmens angeordneten Pressvorrichtung (9) zum Pressen von landwirtschaftlichem Erntegut zu einem Ballen (50) in einer Presskammer (14), einem zur Presskammer (14) führenden Zuführkanal (7) für Erntegut sowie wenigstens einer Bindeeinheit (20, 30), die bezüglich einer Längsachse (X) vorderseitig der Pressvorrichtung (9) angeordnet ist und eine Bindematerialaufnahme (22, 32) zur Bevorratung von Bindematerial sowie eine Zuführeinheit (23, 33) zum Heranführen von Bindematerial in Richtung der Presskammer (14) aufweist, wobei wenigstens eine Bindeeinheit (20, 30) gegenüber dem Rahmen aktorisch verstellbar ist und wobei vorderseitig der Pressvorrichtung (9) und wenigstens teilweise zwischen der wenigstens einen Bindeeinheit (20, 30) und der Pressvorrichtung (9) ein Fallraum (15) ausgebildet ist,
**dadurch gekennzeichnet, dass**
für eine Ballenbildung automatisch wenigstens eine Bindeeinheit (20, 30) derart in eine Fernstellung verstellt wird, dass der Fallraum (15) wenigstens bereichsweise erweitert wird, und für einen Bindevorgang nach der Ballenbildung derart in eine Nahstellung verstellt wird, dass der Fallraum (15) wenigstens bereichsweise verengt wird.
